# EUROPÄISCHE PATENTSCHRIFT

(11) **EP 2 825 780 B1**
(45) Veröffentlichungstag und Bekanntmachung des Hinweises auf die Patenterteilung: **06.07.2016**
(21) Anmeldenummer: 13709840.6
(22) Anmeldetag: 05.03.2013
(51) Int. Cl.: F16B 13/06, F16B 13/08

(54) **SPREIZANKER**
EXPANSION ANCHOR
ÉLÉMENT D'ANCRAGE EXPANSIBLE

(30) Priorität: 13.03.2012 DE 102012203865
(43) Veröffentlichungstag der Anmeldung: 21.01.2015
(73) Patentinhaber: Hilti Aktiengesellschaft, 9494 Schaan (LI)
(72) Erfinder: ROESSNER, Marcel, A-6800 Feldkirch (AT)
(74) Vertreter: Hilti Aktiengesellschaft Corporate Intellectual Property
(86) Internationale Anmeldenummer: PCT/EP2013/054340
(87) Internationale Veröffentlichungsnummer: WO 2013/135524

(56) Entgegenhaltungen:
- EP-A1- 0 210 127
- EP-A2- 2 400 167
- GB-A- 2 455 635

## Beschreibung

Die Erfindung betrifft einen Spreizanker mit einem länglichen Grundkörper, der eine im Wesentlichen in Längsrichtung verlaufende Aufnahme aufweist, in die ein Spreizelement in Längsrichtung einführbar ist, um Spreizlappen seitlich aus einer Ausgangsposition in eine Spreizposition zu drücken, wobei zumindest ein Setzkontrolielement in Längsrichtung verschiebbar am Spreizanker vorgesehen ist und durch Bewegen des Spreizelements relativ zum Grundkörper mit dem Spreizelement verschoben wird.

Spreizanker werden verwendet, um Bauteile in einem Untergrund zu befestigen. Dazu weist der Grundkörper des Spreizankers Spreizlappen auf, die nach dem Einführen des Spreizankers in eine Bohrung seitlich aufgespreizt werden können und so den Spreizanker in der Bohrung verklemmen. Dazu ist üblicherweise ein Spreizelement vorgesehen, das im Spreizanker in Längsrichtung verschiebbar gelagert ist und beim Verschieben die Spreizlappen seitlich in eine Spreizposition drückt. Nachteilig an den bisher bekannten Spreizankern ist, dass nach dem Einführen des Spreizankers in den Untergrund keine Kontrolle möglich ist, ob die Spreizlappen ausreichend aufgespreizt sind, um eine ausreichende Klemmwirkung zu erzielen.

Die EP 2 400 167 A2 beschreibt einen Spreizanker, welcher mit flügelartigen Expansionsteilen ausgestattet ist. Der Expansionszustand dieser flügelartigen Expansionsteile erlaubt Rückschlüsse auf den Zustand des Ankers.

Aus der EP 0 210 127 A1 ist ein Spreizanker bekannt, bei dem die Gewindeankerstange eine Markierung trägt. Diese Markierung wird bei vollständig ausgelenkten Verriegelungskörpern freigegeben, um dem Handhabenden das vollständige Auslenken der Verriegelungskörper anzuzeigen.

Aufgabe der Erfindung ist es, einen Spreizanker der eingangs genannten Art zu schaffen, der eine bessere Überprüfung der Spreizeigenschaften im eingebauten Zustand ermöglicht.

Ein erfindungsgemäßer Spreizanker ist dadurch gekennzeichnet, dass am Grundkörper wenigstens ein im Wesentlichen axial verlaufender und an die Aufnahme radial angrenzender Kanal oder eine im Wesentlichen axial verlaufende und an die Aufnahme radial angrenzende Aussparung vorgesehen ist, wobei das zumindest eine Setzkontrollelement im Kanal beziehungsweise der Aufnahme verschiebbar geführt ist.

Bei einem erfindungsgemäßen Spreizanker mit einem länglichen Grundkörper, der eine im Wesentlichen in Längsrichtung verlaufende Aufnahme aufweist, in die ein Spreizelement in Längsrichtung einführbar ist, um Spreizlappen seitlich aus einer Ausgangsposition in eine Spreizposition zu drücken, ist zumindest ein Setzkontrollelement vorhanden, das in Längsrichtung verschiebbar am Spreizanker vorgesehen ist und durch Bewegen des Spreizelements relativ zum Grundkörper mit diesem verschoben wird. Die Position bzw. die Lage der Spreizlappen kann bei eingeschobenem Spreizanker nicht kontrolliert werden. Die Spreizwirkung der Spreizlappen in Abhängigkeit von der Position des Spreizelements kann zwar vorab bestimmt werden. Die Position des Spreizelements lässt sich aber bei eingeschobenem Spreizelement nicht ausreichend genau bestimmen. Aus diesem Grund ist ein Setzkontrollelement vorgesehen, das beim Einschieben des Spreizelements mit diesem verschoben wird, wodurch die Positionsänderung des Spreizelements von außen bestimmt wird. Da das Setzkontrollelement keine Kräfte, beispielsweise Spreizkräfte, übertragen muss, kann dieses sehr leicht ausgebildet sein und beispielsweise nach dem Einsetzen des Spreizankers und der Kontrolle der Spreizwirkung auch zumindest teilweise entfernt werden, sodass der Spreizanker bündig mit der Oberfläche des Bauteils abschließt.

Vorzugsweise ist das Setzkontrollelement langgestreckt ausgebildet. Das Setzkontrollelement kann dadurch einfach in Längsrichtung in oder an der Aufnahme gelagert werden, sodass ein einfaches Verschieben in Längsrichtung möglich ist. Um eine einfache Kontrolle der Einschubtiefe des Spreizelements zu ermöglichen, erstreckt sich das Setzkontrollelement beispielsweise in der Ausgangsposition des Spreizelements aus dem Grundkörper heraus und steht in der Spreizposition nicht rückseitig aus dem Grundkörper hervor. Das heißt, es ist eine einfache Kontrolle der Position des Spreizelements möglich, da bei korrekt eingesetztem Spreizelement das Setzkontrollelement nicht mehr aus der Aufnahme hervorsteht oder sogar nicht sichtbar ist.

Um die Bewegung des Spreizelements im Grundkörper nicht zu beeinträchtigen, weist der Grundkörper wenigstens einen im Wesentlichen axial verlaufenden Kanal oder eine Aussparung auf, in der das zumindest eine Setzkontrollelement verschiebbar geführt ist. Der Kanal oder die Aussparung ist so ausgebildet, dass das Setzkontrollelement außerhalb der Bewegungsbahn des Spreizelements geführt ist, wodurch das Spreizelement bzw. das Setzkontrollelement nicht verklemmen kann. Somit ist eine Beeinträchtigung der Funktionsweise des Spreizankers sicher ausgeschlossen.

Dieser Kanal oder diese Aussparung grenzen an die Aufnahme an, bilden also eine von der Aufnahme ausgehende Nut, wodurch eine leichtere Herstellung der Aussparung oder des Kanals möglich ist.

Die Aufnahme des Spreizankers kann ein Gewinde aufweisen, in das das Spreizelement mit einem korrespondierenden Gewinde eingeschraubt werden kann, wodurch ein genau kontrolliertes Einschieben des Spreizelements und somit ein genaues Einschieben bis zu einer gewünschten Einschubtiefe des Spreizelements in der Aufnahme möglich ist. Der Kanal oder die Aussparung grenzen vorzugsweise an das Gewinde an. Das heißt, der Kanal oder die Aussparung und das darin verlaufende Setzkontrollelement ragen nicht in das Gewinde hinein, sodass sich das Spreizelement ungehindert in der Aufnahme bewegt werden kann.

Der Kanal oder die Aussparung erstreckt sich wenigstens bis an den Gewindegrund des Gewindes und unterteilt das Gewinde in Abschnitte, sodass das Setzkontrollelement außerhalb des Gewindes geführt ist und nicht in dieses hineinragt.

Der Kanal kann ferner für eine einfache Herstellung des Gewindes genutzt werden. Üblicherweise wird das Schneidwerkzeug zum Schneiden eines solchen Gewindes über mehrere Windungen in die Aufnahme eingedreht, wobei pro Umdrehung nur eine Gewindeumdrehung geschnitten werden kann. Anschließend muss der Gewindeschneider wieder vollständig aus der Aufnahme beziehungswiese dem neu geschnittenen Gewinde herausgeschraubt werden. Durch den Kanal oder die Aussparung kann ein Schneidwerkzeug mit mehreren in Längsrichtung hintereinander liegenden Schneidkanten verwendet werden, das mit den Schneidkanten ohne Drehen axial über den oder die Kanäle oder Aussparungen vollständig in die Aufnahme eingeführt werden kann. Zum Schneiden des Gewindes wird dieser Gewindeschneider nach dem Einführen in die Aufnahme um seine Längsachse gedreht, bis die Schneidkanten wieder in der in Umfangsrichtung nächsten Aussparung oder Kanal liegen. Jede dieser Schneidkanten hat dabei eine vollständige Gewindeumdrehung des Gewindes geschnitten, wobei alle geschnittenen Gewindeumdrehungen gemeinsam ein vollständiges Gewinde bilden. Da die Schneidkanten wieder in der Aussparung oder dem Kanal liegen, kann der Gewindeschneider anschließend in axialer Richtung einfach aus der Aufnahme entnommen werden. Es ist also möglich, die gesamte Länge des Gewindes mit maximal einer einzigen Umdrehung des Gewindeschneiders zu schneiden. Nach dem Schneiden des Gewindes kann die Aussparung bzw. der Kanal zur Führung des Setzkontrollelements verwendet werden.

Es ist auch möglich, dass mehrere Setzkontrollelemente vorgesehen sind, die insbesondere gleichmäßig in Umfangsrichtung verteilt angeordnet sind. Diese können beispielsweise den einzelnen Spreizlappen zugeordnet sein, sodass eine genauere Überprüfung der Position des Spreizelements und somit der Spreizlappen möglich ist.

Falls mehrere Setzkontrollelemente verwendet werden, können diese miteinander verbunden sein, sodass diese gemeinsam vom Spreizelement verschoben werden.

Am Spreizelement ist beispielsweise ein Mitnehmer vorgesehen, der in die Bewegungsstrecke des Spreizelements ragt und mit diesem koppelbar oder gekoppelt ist. Dieser Mitnehmer kann beispielsweise ein Ring sein, in den eine Spitze des Spreizelements hineinragt. Das Spreizelement nimmt diesen Ring bei einer Bewegung in Längsrichtung mit und verschiebt dadurch die Setzkontrollelemente.

Das Setzkontrollelement kann beispielsweise so mit dem Spreizelement koppelbar sein, dass das Setzkontrollelement beim Einschieben des Spreizelements mit diesem verschoben wird, aber bei einem Lösen des Spreizankers durch Zurückziehen des Spreizelements, in der Aufnahme verbleibt. Es ist aber auch denkbar, dass das Setzkontrollelement fest mit dem Spreizelement gekoppelt bleibt und beim Zurückziehen des Spreizelements aus der Aufnahme gemeinsam mit diesem wieder hinausgezogen wird. Dies ermöglicht beim Lösen des Spreizankers eine Sichtkontrolle, ob das Spreizelement ausreichend weit zurückgezogen wurde, um die Spreizwirkung der Spreizlappen so weit zu reduzieren, dass der Spreizanker aus der Bohrung herausgezogen werden kann. Zudem kann der Spreizanker so mehrfach verwendet werden.

Das Setzkontrollelement kann dazu beispielsweise auch vorab eine Einheit bilden und fest am Spreizelement befestigt sein, sodass diese nicht voneinander lösbar sind.

Die Befestigung wird beispielsweise dadurch gebildet, dass der Mitnehmer an einem Absatz oder an einer Nut am Spreizelement gelagert ist.

Der Mitnehmer und das zumindest eine Setzkontrollelement sind beispielsweise einstückig, insbesondere aus einem Blech hergestellt, wodurch die Herstellung dieses Setzkontrollelements vereinfacht werden kann. Die Setzkontrollelemente ragen zum Beispiel sternförmig von einem ringförmigen Mitnehmer ab und werden vor dem Einsetzen in den Grundkörper des Spreizankers rechtwinklig umgebogen.

Am Spreizanker ist vorzugsweise ein Spreizelement vorgesehen, das insbesondere eine konisch zulaufende Spitze aufweist. Diese Spitze verdrängt beim Einschieben des Spreizelements in den Grundkörper die Spreizlappen seitlich in die Spreizposition. Die Spreizlappen können, um diese Spreizwirkung zu verstärken, eine korrespondierende konische Form aufweisen, sodass eine größere Spreizwirkung erzielt werden kann.

Weitere Vorteile und Merkmale finden sich in der nachfolgenden Beschreibung in Verbindung mit den beigefügten Zeichnungen. In diesen zeigen:
- Figur 1 eine Seitenansicht eines erfindungsgemäßen Spreizankers,
- Figur 2 eine Längsschnittansicht durch den Spreizanker aus Figur 1,
- Figur 3 eine Querschnittsansicht durch den Spreizanker aus Figur 1,
- Figur 4 eine Detailansicht des Setzkontrollelements des Spreizankers aus Figur 1,
- Figur 5 eine Draufsicht auf das Setzkontrollelement aus Figur 4, und
- Figur 6 eine Detailansicht des Spreizankers aus Figur 1 im Bereich der Setzkontrollelemente.

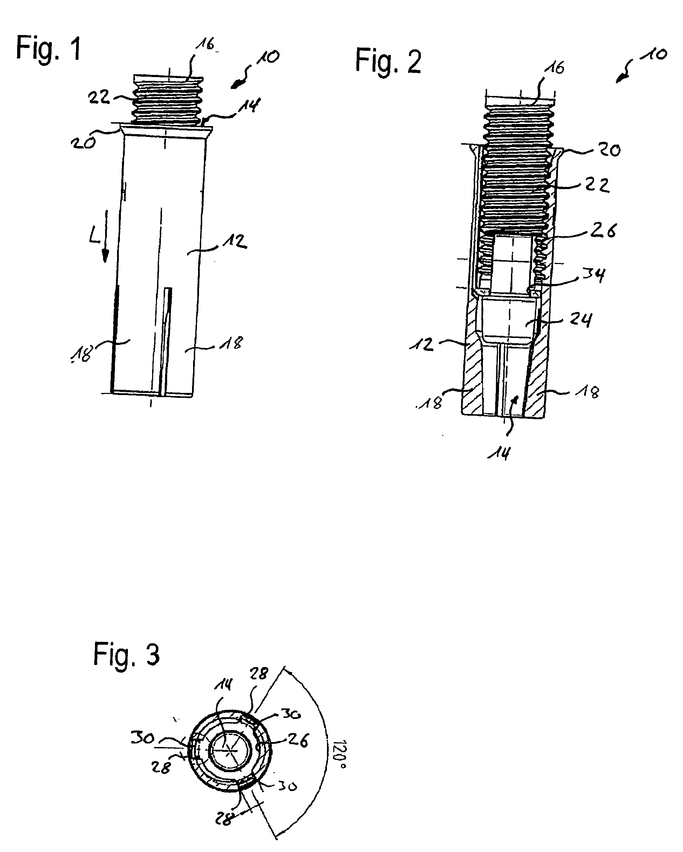

In Figur 1 ist ein Spreizanker 10 zur Befestigung in einem Untergrund dargestellt. Der Spreizanker 10 hat einen länglichen Grundkörper 12 mit einer in Längsrichtung L durchgehenden Aufnahme 14 oder Öffnung. Am in Längsrichtung L vorderen Ende des Grundkörpers 12 sind mehrere Spreizlappen 18 vorgesehen, die radial federnd nach außen weggespreizt werden können. Das in Längsrichtung L hintere Ende des Grundkörpers 12 weist einen konischen Bund 20 auf.

In die Aufnahme 14 ist ein in Längsrichtung L verschiebbares Spreizelement 16 eindrehbar, das, wie in Figur 2 zu sehen ist, ein Außengewinde 22 sowie eine konisch zulaufende Spitze 24 aufweist. Zwischen Außengewinde 22 und Spitze 24 ist eine in Umfangsrichtung umlaufende Nut 34 (siehe Figur 2) vorgesehen.

Der Spreizanker 10 hat ein zum Außengewinde 22 korrespondierendes Innengewinde 26, in das das Spreizelement 16 eingeschraubt werden kann. Im Bereich der Spreizlappen 18 verjüngt sich die Aufnahme 14 in Längsrichtung L.

Zur Montage des Spreizankers 10 wird der Grundkörper 12 in eine Bohrung eines Untergrundes eingesetzt, bis der Bund 20 auf der Oberfläche des Untergrundes anliegt. Der konische Bund 20 schließt vorzugsweise bündig mit der Oberfläche ab oder liegt an dieser auf. Durch den Bund 20 erfolgt zum einen eine Zentrierung in der Bohrung und zum anderen durch die Klemmwirkung des konischen Absatzes in der Bohrung eine Vorfixierung in der Bohrung.

Anschließend wird das Spreizelement 16 in das Gewinde 26 des Grundkörpers 12 eingeschraubt, wobei durch die Vorfixierung über den Bund 20 ein Mitdrehen des Grundkörpers 12 verhindert wird. Am Bund 20 können für eine bessere Fixierung beispielsweise auch in radiale oder in Längsrichtung L vorstehende Vorsprünge oder Rippen vorgesehen sein.

Durch das Einschrauben wird das Spreizelement 16 in Längsrichtung L bewegt, wodurch die Spreizlappen 18 von der konisch zulaufenden Spitze 24 von der in den Figuren 1 und 2 dargestellten Ausgangsposition radial nach außen in eine Spreizposition gedrückt werden. Die Spreizlappen 18 werden gegen die Wandung der Bohrung gedrückt, wodurch der Spreizanker 10 in der Bohrung verklemmt wird und nicht mehr aus dieser herausgezogen werden kann.

Im Grundkörper 12 sind des Weiteren mehrere, in Längsrichtung L über die gesamte Länge des Grundkörpers 12 verlaufende Aussparungen 28 oder Kanäle vorgesehen (siehe Figur 3). Die Aussparungen erstrecken sich vom Gewindegrund ausgehend radial nach außen, grenzen also an das Gewinde an und sind zur Aufnahme 14 hin offen. Durch diese Aussparungen 28 ist das Gewinde 26 in Umfangsrichtung in mehrere Segmente unterteilt.

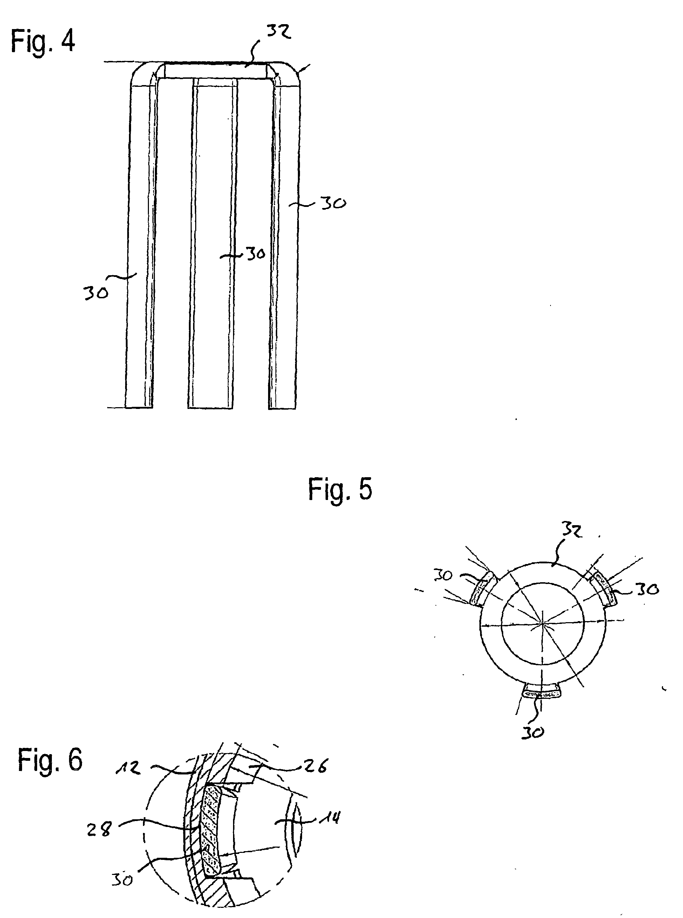

In jeder Aussparung 28 ist ein längliches Setzkontrollelement 30 (siehe Figur 4) in Längsrichtung L verschiebbar angeordnet. Die Setzkontrollelemente sind an einem ringförmigen Mitnehmer 32 befestigt beziehungswiese einstückig mit diesem aus einem Blech hergestellt.

Wie in den Figuren 2 und 3 zu sehen ist, liegen die Setzkontrollelemente 30 vollständig in den Aussparungen 28 und ragen nicht in das Gewinde 26 der Aufnahme 14 hinein.

Der ringförmige Mitnehmer 32 ist in einer Nut 34 des Spreizelements 16 gelagert, sodass der Mitnehmer 32 fest mit dem Spreizelement 16 gekoppelt ist.

In der in Figur 2 gezeigten Ausgangsposition ragen die Setzkontrollelemente 30 entgegen der Längsrichtung L aus der Aufnahme 14 hinaus und sind somit auch bei eingesetztem Spreizanker 10 sichtbar.

Wird das Spreizelement 16 in die Aufnahme 14 eingeschraubt und somit in Längsrichtung L bewegt, werden die Setzkontrollelemente 30, da diese über den Mitnehmer 32 mit dem Spreizelement 16 gekoppelt sind, gemeinsam mit dem Spreizelement 16 in Längsrichtung L verschoben. Über die Verschiebung der Setzkontrollelemente 30 kann die Position des Spreizelements 16 in der Aufnahme 14 überprüft werden. Die Spreizwirkung des Spreizelements 16 beziehungsweise die Aufspreizung der Spreizlappen 18 in Abhängigkeit von der Position des Spreizelements 16 ist bekannt oder kann vorab bestimmt werden. Da über die die Setzkontrollelemente 30 die Position des Spreizelements 16 bestimmt werden kann, kann so kontrolliert werden, ob das Spreizelement 16 eine zum Aufspreizen der Spreizlappen 18 optimale Position erreicht hat. Dies ist insbesondere von Vorteil, falls das Spreizelement 16 so weit eingeschraubt wird, dass eine genaue Kontrolle der Lage des Spreizelements 16 von außen nicht mehr möglich ist.

In der hier gezeigten Ausführungsform sind die Setzkontrollelemente 30 fest über den Mitnehmer 32 mit dem Spreizelement 16 gekoppelt. Dies hat den weiteren Vorteil, dass beim Lösen des Spreizankers 10, also dem Bewegen des Spreizelements 16 entgegen der Längsrichtung L, auch die Setzkontrollelemente 30 in diese Richtung mitgenommen werden.

Vor der Demontage des Spreizankers 10 kann also auch überprüft werden, ob das Spreizelement 16 weit genug zurück bewegt wurde und die Spreizwirkung auf die der Spreizlappen 18 so weit reduziert ist, dass das der Spreizanker aus der Bohrung entnommen werden kann.

Abweichend davon ist es aber auch denkbar, dass die Setzkontrollelemente 30 nicht fest mit dem Spreizelement 16 gekoppelt sind, sondern lediglich von diesem in Längsrichtung L mitgenommen werden, aber nach dem Herausziehen des Spreizelements 16 in der Spreizposition verbleiben.

Die Aussparungen 28 grenzen in der hier gezeigten Ausführungsform an die Aufnahme 14 an, ragen aber nicht in das Gewinde 26 hinein (siehe Figur 6). Das heißt, die Bewegung des Spreizelements 16 wird durch die in den Aussparungen 28 gelagerten Setzkontrollelemente 30 nicht eingeschränkt.

Vor dem Einsetzen der Setzkontrollelemente 30 können diese Aussparungen 28 zudem zur Herstellung des Gewindes 26 genutzt werden. Dazu wird ein Gewindeschneider verwendet, der mehrere in Längsrichtung L hintereinander angeordnete Schneidkanten aufweist. Der Gewindeschneider wird mit diesen Schneidkanten in die Aussparung 28 eingeschoben und nach dem vollständigen Einführen um seine Längsachse gedreht. Dabei schneidet jede der Schneidkanten von der Nut ausgehend eine vollständige Gewindeumdrehung des Gewindes 26, bis sich die Schneidkanten nach einer Umdrehung um 360° wieder in der Aussparung 28 befinden. Anschließend kann der Gewindeschneider entgegen der Längsrichtung L wieder aus der Aufnahme herausgezogen werden. Dadurch wird die gesamte Länge des Gewindes 26 mit einer einzigen Umdrehung eines Gewindeschneiders geschnitten, wodurch eine wesentlich schnellere Herstellung des Gewindes 26 möglich ist.

Da in der hier gezeigten Ausführungsform drei gleichmäßig in Umfangsrichtung verteilt angeordnete Aussparungen 28 vorgesehen sind, kann auch ein Gewindeschneider mit drei jeweils um 120° versetzten Schneidkantengruppen verwendet werden. Der Gewindeschneider muss lediglich so weit gedreht werden, bis sich die Schneidkanten wieder in der nächsten Aussparung 28 befinden, also um 120°.

Die in dieser Ausführungsform gezeigten Setzkontrollelemente 30 können bei jeder Art von Spreizankers 10 verwendet werden, die ein Spreizelement 16 verwendet, um einen Teil des Spreizankers 10 radial aufzuweiten, beispielsweise auch Schlagdübel. Ein Gewinde 26 für das Spreizelement 16 ist nicht zwingend erforderlich.

Auch die Anzahl und die Verteilung der Setzkontrollelemente 30 kann beliebig variiert bzw. an die jeweiligen Anforderungen angepasst werden. Es ist lediglich erforderlich, dass das Setzkontrollelement 30 so angeordnet ist, dass eine Überprüfung der Position des Setzkontrollelements 30 und somit eine Kontrolle der Position des Spreizelements 16 möglich ist.

Das Setzkontrollelement 30 ist insbesondere so ausgebildet, dass dieses in der Spreizposition des Spreizelements 16 nicht aus der Aufnahme 14 herausragt und der Spreizanker bündig mit der Oberfläche des Bauteils abschließt. Das Setzkontrollelement kann in dieser Position aber auch aus der Aufnahme herausragen. In diesem Fall sind am Setzkontrollelement 30 entsprechende Markierungen vorgesehen, über die die Position des Spreizelements 16 kontrollierbar ist. Über solche Markierungen ist beispielsweise auch eine genaue Einstellung einer gewünschten Klemmkraft möglich.

Die Setzkontrollelemente 30 können statt in Aussparungen, die eine Verbindung zur Aufnahme 14 aufweisen, auch in separaten Kanälen geführt werden.

## Patentansprüche

1. Spreizanker (10) mit einem länglichen Grundkörper (12), der eine im Wesentlichen in Längsrichtung (L) verlaufende Aufnahme (14) aufweist, in die ein Spreizelement (16) in Längsrichtung (L) einführbar ist, um Spreizlappen (18) seitlich aus einer Ausgangsposition in eine Spreizposition zu drücken, wobei zumindest ein Setzkontrollelement (30) in Längsrichtung (L) verschiebbar am Spreizanker (10) vorgesehen ist und durch Bewegen des Spreizelements (16) relativ zum Grundkörper (12) mit dem Spreizelement (16) verschoben wird, **dadurch gekennzeichnet,**
**dass** am Grundkörper (12) wenigstens ein im Wesentlichen axial verlaufender und an die Aufnahme (14) radial angrenzender Kanal oder eine im Wesentlichen axial verlaufende und an die Aufnahme (14) radial angrenzende Aussparung vorgesehen ist, wobei das zumindest eine Setzkontrollelement (30) im Kanal beziehungsweise der Aufnahme verschiebbar geführt ist.

2. Spreizanker nach Anspruch 1, **dadurch gekennzeichnet, dass** das zumindest eine Setzkontrollelement (30) langgestreckt ausgebildet ist und sich insbesondere in der Ausgangsposition des Spreizelements (16) aus dem Grundkörper (12) heraus erstreckt und in der Spreizposition nicht rückseitig aus dem Grundkörper (12) hervorsteht.

3. Spreizanker nach einem der vorstehenden Ansprüche **dadurch gekennzeichnet, dass** in der Aufnahme (14) ein Gewinde (26) vorgesehen ist, wobei der Kanal oder die Aussparung (28) an das Gewinde (26) angrenzt und/oder dass das zumindest eine Setzkontrollelement (30) nicht in das Gewinde (26) ragt.

4. Spreizanker nach einem der vorstehenden Ansprüche, **dadurch gekennzeichnet, dass** sich der Kanal oder die Aussparung (28) bis wenigstens an den Gewindegrund erstreckt und das Gewinde (26) in Abschnitte unterteilt.

5. Spreizanker nach einem der vorhergehenden Ansprüche, **dadurch gekennzeichnet, dass** mehrere Setzkontrollelemente (30) vorgesehen sind, die insbesondere gleichmäßig in Umfangsrichtung verteilt angeordnet sind.

6. Spreizanker nach Anspruch 5, **dadurch gekennzeichnet, dass** die Setzkontrollelemente (30) miteinander verbunden sind.

7. Spreizanker nach einem der vorhergehenden Ansprüche, **dadurch gekennzeichnet, dass** am Setzkontrollelement (30) ein Mitnehmer (32), vorzugsweise ein Ring vorgesehen ist, der in die Bewegungsstrecke des Spreizelements (16) ragt und mit diesem koppelbar oder gekoppelt ist.

8. Spreizanker nach Anspruch 7, **dadurch gekennzeichnet, dass** das Setzkontrollelement (30) am Spreizelement (16) befestigt ist.

9. Spreizanker nach Anspruch 7 oder 8, **dadurch gekennzeichnet, dass** der Mitnehmer (32) an einem Absatz oder in einer Nut (34) am Spreizelement (16) gelagert ist.

10. Spreizanker nach einem der Ansprüche 7 bis 9, **dadurch gekennzeichnet, dass** der Mitnehmer (32) und das zumindest eine Setzkontrollelement (30) einstückig, insbesondere aus einem Blech hergestellt sind.

11. Spreizanker nach einem der vorhergehenden Ansprüche, **dadurch gekennzeichnet, dass** ein Spreizelement (16) vorgesehen ist, das eine konische Spitze (24) aufweist.

## Claims

1. Expansion anchor (10) with a longitudinal base body (12), which has a support (14) running essentially in a longitudinal direction (L), into which an expansion element (16) may be introduced in a longitudinal direction (L), in order to press expansion lobes (18) sideways out of an initial position into an expansion position, in which at least one setting control element (30) is provided, which may be moved in the longitudinal direction (L) on the expansion anchor (10), and is moved with the expansion element (16) by moving the expansion element (16) in relation to the base body (12),
**characterised in that**
at least one channel running essentially axially and radially abutting the support (14) or one recess running essentially axially and radially abutting the support (14) is provided on the base body (12), in which the at least one setting control element (30) is carried in the channel or support so that it may move.

2. Expansion anchor according to claim 1, **characterised in that** the at least one setting control element (30) is made elongated and in particular extends out of the base body (12) in the initial position of the expansion element (16) and does not project from the base body (12) at the back in the expansion position.

3. Expansion anchor according to one of the previous claims, **characterised in that** a thread (26) is provided in the support (14), in which the channel or the recess (28) abuts the thread (26) and/or that the at least one setting control element (30) does not project into the thread (26).

4. Expansion anchor according to one of the previous claims, **characterised in that** the channel or recess (28) extends at least to the thread root and the thread (26) is divided into sections.

5. Expansion anchor according to one of the previous claims, **characterised in that** several setting control elements (30) are provided, which are arranged in particular distributed evenly in the circumferential direction.

6. Expansion anchor according to claim 5, **characterised in that** the setting control elements (30) are connected to each other.

7. Expansion anchor according to one of the previous claims, **characterised in that** a carrier (32), preferably a ring, is provided on the setting control element (30), which projects into the movement track of the expansion element (16) and may be connected or is connected to this.

8. Expansion anchor according to claim 7, **characterised in that** the setting control element (30) is fastened to the expansion element (16).

9. Expansion anchor according to claim 7 or 8, **characterised in that** the carrier (32) is housed on an indentation or in a groove (34) on the expansion element (16).

10. Expansion anchor according to one of claims 7 to 9, **characterised in that** the carrier (32) and the at least one setting control element (30) is made in one piece, in particular out of one sheet.

11. Expansion anchor according to one of the previous claims, **characterised in that** an expansion element (16) is provided, which has a conical tip (24).

## Revendications

1. Ancrage expansible (10) comportant un corps principal longitudinal (12) incluant un logement (14) s'étendant dans une direction sensiblement longitudinale (L), logement dans lequel peut être introduit un élément expansible (16) dans la direction longitudinale (L) afin de presser latéralement des languettes expansibles (18) d'une position de départ à une position écartée, dans lequel au moins un élément de contrôle de placement (30) est prévu sur l'ancrage expansible (10) de manière à pouvoir se déplacer dans la direction longitudinale (L) et est déplacé avec l'élément expansible (16) par un mouvement de l'élément expansible (16) par rapport au corps principal (12), **caractérisé en ce que**
sur le corps principal (12) est prévu au moins un canal radialement adjacent au logement (14) et s'étendant de manière sensiblement axiale, ou un évidement radialement adjacent au logement (14) et s'étendant de manière sensiblement axiale, dans lequel le au moins un élément de contrôle de placement (30) est guidé de manière mobile dans le canal ou le logement.

2. Ancrage expansible selon la revendication 1, **caractérisé en ce que** le au moins un élément de contrôle de placement (30) est formé étiré longitudinalement et s'étend en particulier dans la position de départ de l'élément expansible (16) à partir du corps principal (12) et ne fait pas saillie à l'arrière à partir du corps principal (12) dans la position écartée.

3. Ancrage expansible selon l'une des revendications précédentes, **caractérisé en ce qu'**un filetage (26) est prévu dans le logement (14), dans lequel le canal ou l'évidement (28) est adjacent au filetage (16) et/ou **en ce que** le au moins un élément de contrôle de placement (30) ne fait pas saillie dans le filetage (26).

4. Ancrage expansible selon l'une des revendications précédentes, **caractérisé en ce que** le canal ou l'évidement (28) s'étend au moins jusqu'au fond du filetage et divise le filetage (26) en plusieurs parties.

5. Ancrage expansible selon l'une des revendications précédentes, **caractérisé en ce que** sont prévus plusieurs éléments de contrôle de placement (30) qui sont agencés en particulier de manière uniformément répartie dans la direction circonférencielle.

6. Ancrage expansible selon la revendication 5, **caractérisé en ce que** les éléments de contrôle de placement (30) sont reliés les uns aux autres.

7. Ancrage expansible selon l'une des revendications précédentes, **caractérisé en ce que** sur l'élément de contrôle de placement (30) est prévu un élément d'entraînement (32), de préférence un anneau, qui fait saillie pendant la course de déplacement de l'élément expansible (16) et qui peut être couplé ou est couplé à celui-ci.

8. Ancrage expansible selon la revendication 7, **caractérisé en ce que** l'élément de contrôle de placement (30) est fixé à l'élément expansible (16).

9. Ancrage expansible selon la revendication 7 ou 8, **caractérisé en ce que** l'élément d'entraînement (32) est monté sur un épaulement ou dans une rainure (34) sur l'élément expansible (16).

10. Ancrage expansible selon l'une des revendications 7 à 9, **caractérisé en ce que** l'élément d'entraînement (32) et le au moins un élément de contrôle de placement (30) sont fabriqués de manière solidaire, en particulier à partir d'une tôle.

11. Ancrage expansible selon l'une des revendications précédentes, **caractérisé en ce qu'**est prévu un élément expansible (16) qui comporte une pointe conique (24).
